# EUROPÄISCHE PATENTSCHRIFT

(11) **EP 2 037 224 B1**
(45) Veröffentlichungstag und Bekanntmachung des Hinweises auf die Patenterteilung: **14.10.2015**
(21) Anmeldenummer: 08005214.5
(22) Anmeldetag: 19.03.2008
(51) Int. Cl.: B66C 13/16, B66C 13/46, G01D 5/249, G01D 5/347, G05D 1/02, G01D 5/26, B61L 25/02

(54) **Verfahren und Vorrichtung zum Bestimmen der Position eines Fahrzeugs, Computerprogramm und Computerprogrammprodukt**
Method and device for determining the position of a vehicle, computer program and computer program product
Procédé et dispositif destinés à la détermination de la position d'un véhicule, programme informatique et produit de programme informatique

(30) Priorität: 12.09.2007 DE 102007043498; 12.09.2007 DE 202007012798 U
(43) Veröffentlichungstag der Anmeldung: 18.03.2009
(73) Patentinhaber: Pepperl + Fuchs GmbH, 68307 Mannheim (DE)
(72) Erfinder: Hofmann, Hilmar, 69502 Hemsbach (DE); Opper, Rüdiger, 67240 Bobenheim-Roxheim (DE); Kirsch, Martin, 68259 Mannheim (DE)
(74) Vertreter: Schiffer, Axel Martin

(56) Entgegenhaltungen:
- EP-A- 1 075 996
- EP-A- 1 418 109
- WO-A-2007/091072
- DE-A1- 19 910 933
- DE-C1- 19 532 104
- US-A- 5 332 180
- US-A1- 2006 244 830

## Beschreibung

Die vorliegende Erfindung betrifft in einem ersten Aspekt ein Verfahren zum Bestimmen der Position eines Fahrzeugs nach dem Oberbegriff des Anspruchs 1.

In einem weiteren Gesichtspunkt bezieht sich die Erfindung auf eine Vorrichtung zum Bestimmen der Position eines Fahrzeugs nach dem Oberbegriff des Anspruchs 11.

Außerdem betrifft die Erfindung ein Computerprogramm und ein Computerprogrammprodukt.

Ein gattungsgemäßes Verfahren ist beispielsweise in DE 199 10 933 A1 offenbart. Hierbei wird ein Fahrzeug entlang einer Bahn, welche grundsätzlich entlang einer beliebigen Kurve verlaufen kann, bewegt und zur Positionsbestimmung sind entlang der Bahn eindimensionale Barcodes angeordnet.

Die Erfindung bezieht sich insbesondere auf Fahrzeuge wie EinschienenHängebahnen, Regalbediengeräte, Krananlagen oder sonstige verfahrbare Geräte, die entlang einer Bahn oder auf oder parallel zu einer vorgegebenen Fläche verfahrbar sind.

Weitere Positionierverfahren sind in EP 0 039 921 A2, DE 38 25 097 A1, EP 0 116 636 A1, DE 39 10 873 A1, DE 42 09 629 A1 und DE 43 09 863 C1 beschrieben. Diese bekannten Systeme weisen folgende Nachteile auf.

Die erreichbare Genauigkeit der Positionsbestimmung ist durch die Länge der Codemarken oder deren Elemente begrenzt, da die Codeelemente in einer oder mehreren parallelen Spuren längs des Fahrwegs aufgereiht sind und beim Verfahren nacheinander abgetastet werden müssen. Die Packungsdichte der Codeelemente auf dem Codeträger kann aber nicht über ein gewisses Maß hinaus erhöht werden, weil das räumliche Auflösungsvermögen der Abtastelemente, z.B. Lichtschranken, begrenzt ist. Die Länge der Codeträger kann daher nicht unter einen bestimmten Mindestwert verkleinert werden, so dass der Positionsauflösung Grenzen gesetzt sind.

Ferner ist zur lückenlosen Abdeckung eines langen Fahrwegs mit ausreichender Längsauflösung eine große Anzahl von Codeträgern und somit, wenn sich der Codeinhalt längs des Fahrweges nicht wiederholen soll, eine entsprechend große Wortbreite der Codes erforderlich. Eine zunehmende Wortbreite lässt aber nicht nur die Länge der einzelnen Codeträger, sondern vor allem auch den Aufwand und die Kosten für die Codeleser sehr schnell anwachsen.

Ferner geht mit längeren Codeträgern eine geringere Auflösung der Positionsbestimmung einher, so dass eine Realisierung von Fahrwegen von mehreren Kilometern, die z.B. in modernen industriellen Fertigungsstraßen erwünscht oder notwendig sein können, mit hinreichender Auflösung schwierig ist. Diese Problematik wird noch erheblich verschärft, wenn auf den Codeträgern redundante Informationen vorhanden sein sollen, um die Betriebssicherheit des Systems, z.B. dessen Resistenz gegen Verschmutzung oder Beschädigung von Teilen des Codeträgers, zu verbessern und dadurch das Risiko von Ausfällen oder, unter Umständen folgenschweren, Fehlpositionierungen zu verringern.

Außerdem erlaubt keines der bekannten Systeme zusätzlich zur Positionsbestimmung in Fahrtrichtung auch eine Positionsbestimmung quer zur Fahrtrichtung. Eine solche kann etwa zum automatischen Ausgleich von temperatur- oder lastwechselbedingten Biegeverformungen wünschenswert sein. Darüber hinaus sind die erforderlichen Abtastelemente, bevorzugt Lichtschranken, anfällig für Dejustierungen und Verschmutzungen und damit wartungsintensiv. Dies spielt insbesondere eine Rolle bei Systemen mit einer Vielzahl von nebeneinander angeordneten Abtastelementen.

Ein weiterer Nachteil der genannten Systeme besteht darin, dass eine Positionsbestimmung bei stillstehendem Fahrzeug nicht ohne weiteres möglich ist. Diejenigen Systeme, welche im Durchlichtverfahren arbeiten, sind außerdem mechanisch aufwändig und anfällig gegen Verformungen des Codeträgers. Einige der oben genannten Systeme sind ferner sehr empfindlich gegen eine Änderungen der Orientierung der Codeträger gegenüber dem Codeleser.

Eine grundsätzliche Anforderung und Aufgabenstellung besteht bei solchen Systemen zur Positionsbestimmung weiterhin darin, eine aktuelle Positionsinformation möglichst zeitnah oder in Echtzeit an einem Ausgang des Systems oder der Vorrichtung bereitzustellen. In diesem Zusammenhang ist zu berücksichtigen, dass die Bildverarbeitung bei kostengünstigen kamerabasierten optischen Messaufnehmern eine Zeit von typischerweise etwa 10 bis 20 ms benötigt. Gegenüber dieser Zeitspanne, die auch als Latenzzeit bezeichnet wird, fällt die Belichtungszeit des Kamerachips, welche typischerweise etwa 50 µs beträgt, kaum ins Gewicht.

Die oben genannte Latenzzeit von etwa 10 bis 20 ms korrespondiert mit einer Abtastrate von etwa 50 bis 100 Hz. Bei einer Verfahrgeschwindigkeit des Fahrzeugs von beispielsweise 4 m/s entsprechen 20 ms einer Strecke von 8 cm. Im Fall einer Bewegung mit konstanter Geschwindigkeit kann die Position des Fahrzeugs über den letzten Messpunkt hinaus relativ einfach extrapoliert werden. Bei Systemen mit hoher Dynamik, also bei schnellen Anfahr- und Abbremsrampen, entstehen jedoch signifikante systematische Messunsicherheiten. Zu berücksichtigen ist außerdem, dass in industriellen Anlagen häufig Abtastraten von bis zu 1 ms eingesetzt werden, so dass insgesamt erwünscht ist, die Messinformation bei Positionsaufnehmern schneller und/oder mit einer höheren Rate zur Verfügung zu stellen.

Aus DE 195 32 104 C1 sind ein Verfahren und eine Vorrichtung zur Bestimmung der Position eines Eisenbahnfahrzeugs bekannt. Hierbei werden sowohl Wegmarken als auch BeschleunigUngssensoren genutzt.

WO 2007/091072 A1 beschreibt eine Vorrichtung zur Bestimmung der Geschwindigkeit und der Position eines Zugs, indem mit einer Kamera Marken am Wegrand des Zuges erfasst und ausgewertet werden.

DE 199 10 933 A1 betrifft eine Vorrichtung zur Positionierung eines Fahrzeugs relativ zu einem Gegenstand, an dem Marken angebracht sind. Ein optischer Sensor erfasst die Marken und eine Positionierung wird anhand der in den Marken codierten Informationen und durch die Lage des optischen Sensors relativ zu einer der Marken durchgeführt.

Gegenstand der US 5,322,180 A ist eine Vorrichtung zur Überwachung des Verkehrs auf Schienennetzen. Hierzu werden die Positionen von sich auf dem Schienennetz bewegenden Zügen durch Messgeräte, die sich an Bord der Züge befinden, bestimmt. Bei diesen Messgeräten kann es sich um Beschleunigungsmesser handeln.

In EP 1 418 109 A1 wird ein Verfahren zur Positions- und Geschwindigkeitsbestimmung von schienengebundenen Zügen beschrieben. Die hierzu erforderlichen Messungen werden zur Sicherheitserhöhung mit mindestens zwei voneinander unabhängigen Messverfahren ausgeführt.

EP 1 075 996 A1 betrifft ein Verfahren zur Ortung von Zügen in einer Gleisanlage. Hierzu führt der Zug eine Objekterkennungseinheit, einen Weglängenmesssensor und eine Drehwinkelmesseinheit mit. Die Positionsbestimmung des Zugs erfolgt durch Verrechnung der Messdaten.

Als eine Aufgabe der Erfindung kann angesehen werden, ein Verfahren bereitzustellen und eine Vorrichtung zu schaffen, welche eine verbesserte Positionsauflösung ermöglichen und längere Fahrwege erlauben. Darüber hinaus soll mit einfachen Mitteln die Messgenauigkeit der Positionsbestimmung für Systeme mit hoher Dynamik gesteigert werden. Außerdem soll ein geeignetes Computerprogramm angegeben werden.

In einem ersten Gesichtspunkt wird diese Aufgabe durch das Verfahren mit den Merkmalen des Anspruchs 1 gelöst.

In einem weiteren Aspekt wird diese Aufgabe durch die Vorrichtung mit den Merkmalen des Anspruchs 10 gelöst.

Außerdem wird die Aufgabe gelöst durch das Computerprogramm mit den Merkmalen des Anspruchs 14 und das Computerprogrammprodukt mit den Merkmalen des Anspruchs 15.

Bevorzugte Ausführungsvarianten des erfindungsgemäßen Verfahrens und vorteilhafte Varianten der erfindungsgemäßen Vorrichtung sind Gegenstand der abhängigen Ansprüche.

Das Verfahren der oben genannten Art ist erfindungsgemäß dadurch weitergebildet, dass die Marker mit einer an dem Fahrzeug angeordneten Digitalkamera erfasst werden, dass mittels Bildverarbeitung aus einer Lage mindestens eines Markerbilds im Erfassungsbereich der Digitalkamera eine Relativposition des Fahrzeugs bezüglich des jeweiligen Markers oder der jeweilige Marker bestimmt wird, dass auf Grundlage von Messdaten eines mit dem Fahrzeug gekoppelten Beschleunigungssensors eine von dem Fahrzeug bis zu einem Abfragezeitpunkt zurückgelegte Wegstrecke bestimmt wird, dass eine aktuelle Position des Fahrzeugs unter Berücksichtigung eines zurückliegenden Positionsdatums und der auf Grundlage der Messdaten des Beschleunigungssensors bestimmten Wegstrecke berechnet wird und dass die aktuelle Position des Fahrzeugs ausgegeben wird.

Die Vorrichtung der oben genannten Art ist erfindungsgemäß weitergebildet durch eine an dem Fahrzeug anzuordnende Digitalkamera zum Erfassen von entlang der Bahn angeordneten Markern, insbesondere Codeträgern oder Barcodes, einen mit dem Fahrzeug zu koppelnden Beschleunigungssensor zumindest zum Messen der Beschleunigung des Fahrzeugs in einer Hauptbewegungsrichtung des Fahrzeugs, eine Recheneinrichtung, welche eingerichtet ist zum Bestimmen einer Relativposition des Fahrzeugs bezüglich eines Markers mittels Bildverarbeitung aus einer Lage des Bilds des jeweiligen Markers in einem Erfassungsbereich der Digitalkamera, zum Bestimmen einer von dem Fahrzeug bis zu einem Abfragezeitpunkt zurückgelegten Wegstrecke auf Grundlage von Messdaten des Beschleunigungssensors und einer für einen zurückliegenden Zeitpunkt bekannten Geschwindigkeit des Fahrzeugs und zum Berechnen einer aktuellen Position des Fahrzeugs unter Berücksichtigung eines zurückliegenden Positionsdatums und der auf Grundlage von Messdaten des Beschleunigungssensors bestimmten Wegstrecke.

Erfindungsgemäß wurde zunächst erkannt, dass mit Hilfe von Bildverarbeitungsverfahren eine Positionsbestimmung eines Fahrzeugs in sehr präziser Weise möglich ist, indem die Position oder Lage eines bestimmten Markers in einem Erfassungsbereich einer Digitalkamera bestimmt und ausgewertet wird.

Das erfindungsgemäße Verfahren, bei welchem es sich um ein Auflichtverfahren handelt, kann insbesondere auch eine Positionsinformation für ein stillstehendes Fahrzeug liefern und, im Unterschied zu Verfahren aus dem Stand der Technik, ist auch eine Positionsbestimmung quer zur Fahrt- oder Bewegungsrichtung möglich.

Erfindungsgemäß wurde weiterhin erkannt, dass es bei Messraten von 50 bis 100 Hz bei Bewegungen mit hoher Dynamik zu deutlichen Messunsicherheiten kommt.

Ein zweiter Kerngedanke der Erfindung kann darin gesehen werden, weiterhin mit einem kostengünstigen Kamerasystem zu arbeiten und die Messrate des optischen Positionierungssytems als solche zunächst unverändert zu lassen. Hieraus resultieren deutliche Kostenvorteile.

Als dritter Kerngedanke kann erachtet werden, zum Bestimmen einer Wegstrecke, welche das Fahrzeug seit einer letzten bekannten Position zurückgelegt hat, eine ergänzende Messmethode einzusetzen. Hierzu wird erfindungsgemäß ein Beschleunigungssensor verwendet.

Ein erster wesentlicher Vorteil kann darin gesehen werden, dass eine deutliche Steigerung der Messgenauigkeit für dynamische Systeme erzielt wird.

Ein weiterer Vorteil ist, dass bei dem erfindungsgemäßen Verfahren und der erfindungsgemäßen Vorrichtung weiterhin mit kostengünstigem Kamerachips gearbeitet werden kann.

Darüber hinaus ist die erfindungsgemäße Vorrichtung einfach aufgebaut und das erfindungsgemäße Verfahren ist störungsarm durchzuführen.

Bei der Kamera kann es sich demgemäß um bekannte und verfügbare Komponenten handeln, beispielsweise können Kameras mit einem CCD- oder einem CMOS-Empfängerchip eingesetzt werden.

Grundsätzlich kann es ausreichend sein, aus den festgestellten Markerbildern im Erfassungsbereich der Digitalkamera jeweils die Relativposition des Fahrzeugs bezüglich des jeweiligen Markers zu bestimmen. Bei einer Weiterentwicklung des erfindungsgemäßen Verfahrens kann zusätzlich aus der Relativposition bezüglich eines bestimmten Markers und einer bekannten Absolutposition dieses Markers eine Absolutposition des Fahrzeugs, beispielsweise bezogen auf einen bestimmten Punkt in einer Fertigungshalle, bestimmt werden. Die Absolutposition kann dann direkt ausgegeben und beispielsweise von einer speicherprogrammierbaren Steuerung an andere Komponenten weitergegeben werden.

Als Marker können grundsätzlich alle graphisch darstellbaren Codierungs- und Markierungstypen verwendet werden, deren Strukturen und damit die dort enthaltene Information mit einer Digitalkamera erkannt und ausgewertet werden können.

Bevorzugt werden Barcodes, insbesondere zweidimensionale Barcodes, eingesetzt.

Damit eine festgestellte Relativposition bezüglich eines bestimmten Markers grundsätzlich eindeutig einer bestimmten Absolutposition des Fahrzeugs zugeordnet werden kann, ist es weiterhin bevorzugt, wenn die verwendeten Marker unterschiedlich sind, also mittels Bildverarbeitung eindeutig unterschieden werden können.

Für die Erkennung und Auswertung der Barcodes mit Hilfe von bildverarbeitenden Verfahren ist es zweckmäßig, wenn der Abstand zwischen einzelnen zweidimensionalen Barcodes mindestens so groß ist wie die kleinste in den Barcodes auftretende Struktur, also mindestens so groß wie eine minimale Informationseinheit, insbesondere mindestens so groß wie ein Bit, des zweidimensionalen Barcodes.

Grundsätzlich kann die von dem Fahrzeug in einem Zeitraum von einem zurückliegenden Positionsdatum bis zu einem Abfragezeitpunkt zurückgelegte Wegstrecke durch Integration der von dem Beschleunigungssensor in diesem Zeitraum aufgenommenen Messdaten unter Berücksichtigung der Geschwindigkeit des Fahrzeugs zu Beginn des Zeitraums bestimmt werden. Für Konsistenztests kann beispielsweise die zurückgelegte Wegstrecke auch ausgehend von unterschiedlichen bekannten zurückliegenden Positionen bestimmt werden.

Bei einer einfachen Variante wird die aktuelle Position des Fahrzeugs als Summe des letzten Positionsdatums und der seither zurückgelegten und auf Grundlage von Messdaten des Beschleunigungssensors bestimmten Wegstrecke bestimmt.

Wegen des zugrundeliegenden Messprinzips liegt bei dem hier beschriebenen Verfahren eine präzise Positionsinformation immer dann vor, wenn ein Markerbild durch Bildverarbeitung ausgewertet und zumindest die zu diesem Marker gehörende Relativposition des Fahrzeugs ermittelt wurde.

Erfindungsgemäß wird der Beschleunigungssensor geeicht durch Vergleich von zurückliegenden mit Hilfe der Marker bestimmten Positionsdaten mit denjenigen Positionsdaten, die sich auf Grundlage von Messdaten des Beschleunigungssensors ergeben.

Der Beschleunigungssensor wird geeicht durch Vergleich des letzten Positionsdatums mit der Position, welche sich aus dem vorletzten Positionsdatum und der zwischen den Aufnahmezeitpunkten des vorletzten und des letzten Positionsdatums zurückgelegten und auf Grundlage der Messdaten des Beschleunigungssensors bestimmten Wegstrecke ergibt.

Besonders bevorzugt kann dabei der Beschleunigungssensor im laufenden Betrieb kontinuierlich nachgeeicht werden.

Die Beschleunigungsdaten können außerdem herangezogen werden, um beispielsweise eine Information über den technischen Zustand des fraglichen Fahrzeugs und insbesondere darüber zu erhalten, ob demnächst eine Wartungsphase durchgeführt werden sollte. Bei einem vorteilhaften Ausführungsbeispiel des erfindungsgemäßen Verfahrens wird demgemäß ein Fehlersignal ausgegeben, wenn die Beschleunigung des Fahrzeugs über einen festgelegten Zeitraum innerhalb oder außerhalb eines ebenfalls festgelegten Werteintervalls liegt.

Die Informationsgrundlage wird dabei verbreitert, wenn auch Beschleunigungen des Fahrzeugs quer zu seiner Hauptbewegungsrichtung gemessen und mitprotokolliert werden. Zweckmäßig wird hierfür ein zweiachsiger Beschleunigungssensor eingesetzt, der zum Messen einer Beschleunigung des Fahrzeugs in einer x- und in einer y-Richtung ausgelegt ist. Als x-Richtung kann dabei eine Hauptbewegungsrichtung des Fahrzeugs angesehen werden und die y-Richtung ist dann eine Richtung quer zur Hauptbewegungsrichtung des Fahrzeugs. Der zweiachsige Beschleunigungssensor ist dementsprechend bevorzugt so an dem Fahrzeug positioniert, dass die erste Messachse in Richtung der Hauptbewegungsrichtung des Fahrzeugs und die zweite Messachse in Richtung quer zur Hauptbewegungsrichtung des Fahrzeugs ausgerichtet ist.

Beispielsweise ist bei einer solchen Vorrichtung auch eine Verfahrensvariante möglich, bei der ein Fehlersignal ausgegeben wird, wenn ein Integral der Beträge der Beschleunigungen des Fahrzeugs quer zu seiner Hauptbewegungsrichtung einen festgelegten Grenzwert überschreitet. Man erhält so außerdem eine Information über die Qualität der Bahn, beispielsweise von Rollschienen oder einer zweidimensionalen Abrollfläche.

Beispielsweise können für eine Einschienen-Hängebahn, für welche im Wesentlichen die Position in Verfahrrichtung bestimmt wird, mit Hilfe eines zweiachsigen Beschleunigungssensors außerdem Unregelmäßigkeiten der Bahn oder der Schienen oder mögliche Defekte am Fahrzeug festgestellt werden.

Ein zweidimensionaler Beschleunigungssensor und ein entsprechendes optisches Positionierungssystem kann in entsprechender Weise auch zum Bestimmen der Position in y-Richtung eingesetzt werden. Aus den Messdaten des Beschleunigungssensors und auf Grundlage einer für einen zurückliegenden Zeitpunkt vorliegenden Geschwindigkeitsinformation wird dabei sowohl eine in x-Richtung als auch eine in y-Richtung zurückgelegte Wegstrecke bestimmt.

Die Rechen- und Auswerteschritte des erfindungsgemäßen Verfahrens werden bevorzugt auf der Recheneinrichtung als Computerprogramm ausgeführt.

in grundsätzlich bekannter Weise kann dieses Computerprogramm auf einem computerlesbaren Datenträger, insbesondere in einem ROM eines Mikrocontrollers oder eines programmierbaren Logikbausteins gespeichert sein.

Weitere Vorteile und Merkmale der vorliegenden Erfindung werden nachstehend mit Bezug auf die beigefügten Figuren beschrieben.

Hierin zeigt:
- Figur 1:: eine schematische Ansicht einer erfindungsgemäßen Vorrichtung an einer Laufkatze an einem Kranbalken;
- Figur 2:: eine schematische Ansicht der Messsituation bei einem optischen Positionierungssystem ohne Beschleunigungssensor;
- Figur 3:: eine schematische Ansicht der Messsituation bei der vorliegenden Erfindung; und
- Figur 4:: eine schematische Ansicht der Verläufe der Ortskoordinate, der Geschwindigkeit und der Beschleunigung für ein Fahrzeug, dessen Position mit dem erfindungsgemäßen Verfahren bestimmt wird.

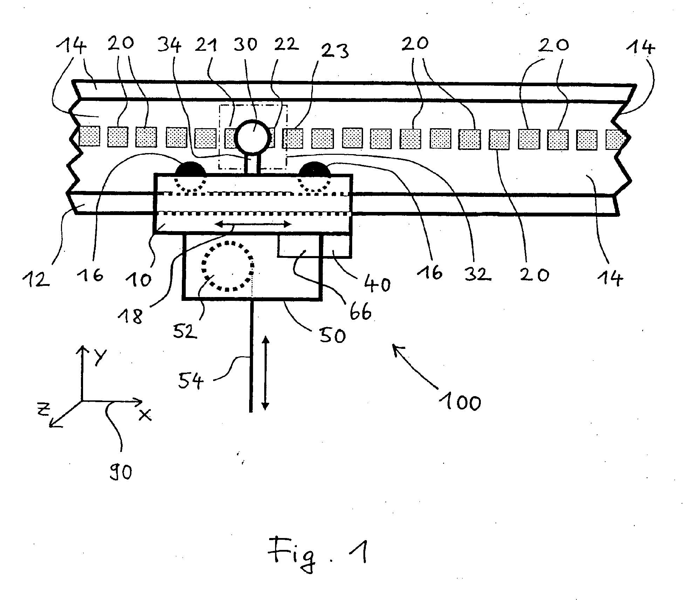

Ein Anwendungsbeispiel für das erfindungsgemäße Verfahren und eine erfindungsgemäße Vorrichtung 100 wird mit Bezug auf Figur 1 erläutert. Gezeigt ist dort ein Fahrzeug 10, welches auf einem Träger 14 mit Hilfe von Rollen 16 und einem hier nicht gezeigten Antrieb verfahrbar ist. Fahrzeuge der in Figur 1 gezeigten Art werden auch als Laufkatzen bezeichnet. Der Träger 14 bildet eine Bahn 12, entlang welcher das Fahrzeug 10 beweglich ist. Die Bewegungsrichtung oder Hauptbewegungsrichtung des Fahrzeugs 10 ist in Figur 1 die x-Richtung und durch einen Doppelpfeil 18 angedeutet. In einem Unterbau 50 des Fahrzeugs 10 ist eine hier schematisch dargestellte Seilwinde 52 positioniert, mit welcher über ein Seil 54 Lasten geladen und transportiert werden können.

Die erfindungsgemäße Vorrichtung 100 weist als wesentliche Bestandteile eine Digitalkamera 30, einen schematisch dargestellten Beschleunigungssensor 66 und eine Recheneinrichtung 40 auf, mit welcher sowohl die Digitalkamera 30 als auch der Beschleunigungssensor 66 wirkungsmäßig, typischerweise durch Verbindungskabel, verbunden sind. Bei besonderen Varianten kann die Recheneinrichtung 40 auch in die Digitalkamera 30 integriert sein.

Die Digitalkamera 30 ist über einen Haltearm 34 starr mit dem Fahrzeug 10 verbunden. Ein im Wesentlichen quadratischer Erfassungsbereich 32 der Digitalkamera 30 ist ebenso schematisch dargestellt.

Der Beschleunigungssensor 66 ist ebenfalls starr mit dem Fahrzeug 10 gekoppelt, so dass sichergestellt ist, dass die tatsächlichen Beschleunigungen des Fahrzeugs 10 gemessen werden. Bevorzugt handelt es sich bei dem Beschleunigungssensor 66 um einen zweiachsigen Beschleunigungssensor, mit welchem sowohl die Beschleunigungen des Fahrzeugs 10 in Richtung des Doppelpfeils 18, also in x-Richtung, als auch quer hierzu, in y-Richtung, gemessen werden. Grundsätzlich können hierfür aber auch separate, jeweils einachsige Beschleunigungssensoren, insbesondere für alle drei Raumrichtungen, vorgesehen sein.

Die Raumrichtungen sind in Figur 1 durch ein Koordinatensystem 90 angegeben.

In der erfindungsgemäß vorhandenen Recheneinrichtung 40 wird das erfindungsgemäße Computerprogramm abgearbeitet. Ein Computerprogrammprodukt im Sinn der Erfindung kann insbesondere die Recheneinrichtung 40 selbst mit zugehörigem ROM-Speicher sein.

Wesentlicher Bestandteil des hier beschriebenen erfindungsgemäßen optischen Positionierungssystems sind außerdem eine Vielzahl von insbesondere jeweils unterschiedlichen Markern 20, wobei es sich im gezeigten Beispiel um zweidimensionale Barcodes handelt. Diese Marker 20 sind entlang dem Träger 14 äquidistant angebracht. Typischerweise handelt es sich hierbei um aufgeklebte Bänder. In der gezeigten Situation werden von der Digitalkamera 30 die Marker 21 und 22 vollständig erfasst. Außerdem wird ein Randbereich des Markers 23 erfasst.

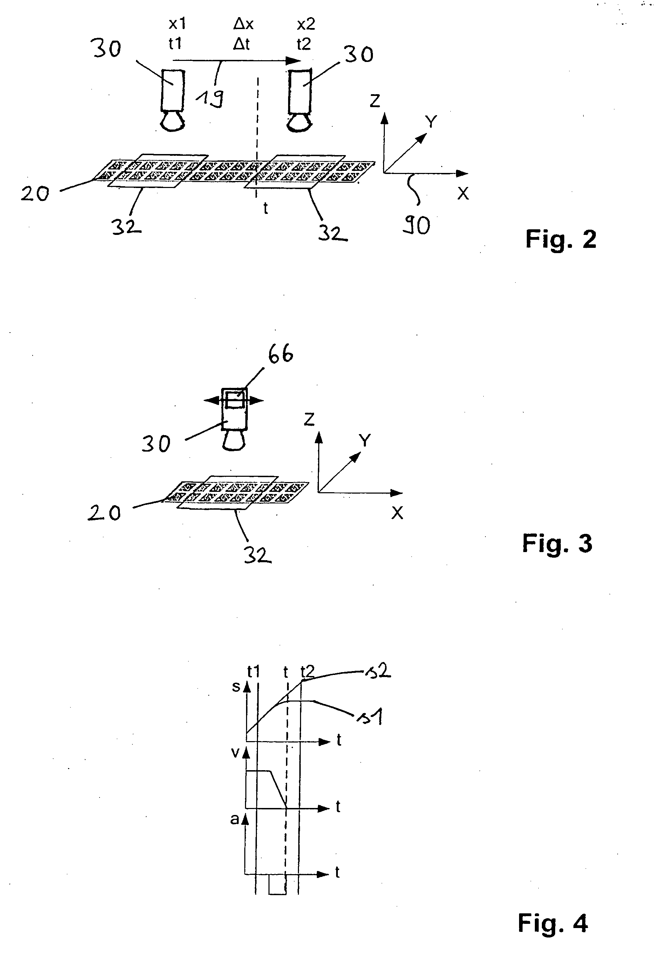

Die Arbeitsweise der erfindungsgemäßen Vorrichtung und des erfindungsgemäßen Verfahrens werden mit Bezug auf die Figuren 2 bis 4 näher erläutert.

Äquivalente Komponenten sind in allen Figuren mit denselben Bezugszeichen versehen.

Figur 2 zeigt eine Kamera 30 an zwei Positionen x1, x2, zu zeitlich aufeinanderfolgenden Zeitpunkten t1 und t2. Die Kamera 30 bewegt sich demgemäß in Figur 2 entlang dem Pfeil 19 nach rechts. An beiden Positionen x1, x2 werden jeweils Bilder von der Kamera aufgenommen. Die zum Zeitpunkt der Aufnahme gültige Position kann erst nach Auslesen des Sensorchips, nach Durchführen der Bildkennung und der entsprechenden Positionsberechnung bestimmt werden. Typische Zeiten hierfür liegen im Bereich von 3 bis 20 ms. Diese Zeit wird auch als Latenzzeit bezeichnet. Außerdem sind in Figur 2 jeweils der Erfassungsbereich 32 und die entsprechenden Marker 20 dargestellt. Zwischen den Ortspositionen x1 und x2 legt die Digitalkamera 30 und somit das Fahrzeug 10 in einer Zeitspanne Δt eine Wegstrecke Δx zurück. Außerdem ist ein Koordinatensystem eingezeichnet.

Für die folgende Erläuterung soll die Ortsposition x1 zum Zeitpunkt t1 die Position der Digitalkamera 30 zum letzten bekannten Zeitpunkt sein. Weiterhin soll die nächste optische Positionserfassung zum Zeitpunkt t2 erfolgen. Aufgabenstellung ist, die Ortsposition der Digitalkamera 30 zum Zeitpunkt t zu bestimmen.

Hierzu werden die Messdaten des Beschleunigungssensors 66 herangezogen. Mit Hilfe dieses Beschleunigungssensors, der, wie in Figur 3 schematisch dargestellt, mit der Digitalkamera 30 starr verbunden ist, können die Abweichungen von einer konstanten Geschwindigkeit ermittelt werden. Damit lässt sich auch bei dynamischen Systemen, also bei sehr schnellen Anfahr- und Abbremsrampen, die Position der Digitalkamera 30 und somit des Fahrzeugs 10, sehr genau bestimmen. Eine Eichung des Beschleunigungssensors 66 kann kontinuierlich erfolgen, da nach der jeweils nächsten Bildaufnahme die Positionsdifferenz genau bekannt ist und die Aufintegration der Beschleunigungswerte hiermit verglichen werden kann.

Figur 3 zeigt schematisch eine Digitalkamera 30 mit einem Beschleunigungssensor 66, dessen Messachse in Bewegungsrichtung, also in x-Richtung positioniert ist.

In Figur 4 sind die jeweiligen Verläufe des zurückgelegten Wegs s, der Geschwindigkeit v und der zugehörigen Beschleunigung a für eine abgebremste Bewegung schematisch dargestellt. Die Kurve des tatsächlichen Verlaufs der Ortsposition ist in Figur 4 mit dem Bezugszeichen s1 gekennzeichnet. Die darüber eingezeichnete Kurve s2 stellt den auf Grundlage der zum Zeitpunkt t1 vorliegenden Geschwindigkeit extrapolierten Verlauf dar. Aus Figur 4 ist unmittelbar ersichtlich, dass die extrapolierte Kurve s2 zum Zeitpunkt t, zu welchem die Positionsbestimmung durchgeführt werden soll, deutlich über dem tatsächlichen Verlauf s1 liegt. Grund hierfür ist die abgebremste Bewegung, welche sich in einer negativen Beschleunigung in der Phase unmittelbar vor dem Zeitpunkt t widerspiegelt.

Mit Hilfe des Beschleunigungssensors 66 können die Werte im unteren Diagramm in Figur 4, also die genannte negative Beschleunigung, erfasst werden. Auf Grundlage der so gemessenen Werte und unter Zuhilfenahme der letzten Geschwindigkeit und Position kann nun durch Integration die reale Position bestimmt werden. Beispielsweise erhält man bei einer Beschleunigung von 4 m/s*s, was bei einer Geschwindigkeit von 4 m/s einem Anhalteweg von 2 m entspricht, und einer Zykluszeit von 20 ms eine Verbesserung gegenüber den unter Annahme einer festen Geschwindigkeit extrapolierten Werten von 0,8 mm.

Noch deutlicher werden diese Verbesserungen, wenn beispielsweise Marker auf der Bahn fehlen, der schlecht lesbar sind, wenn also die letzte bekannte Orts- und Geschwindigkeitsinformation vergleichsweise lange zurückliegt. Auch bei Messsituationen, in denen aus sonstigen Gründen die Abstände zwischen den einzelnen Markern groß sind, wie beispielsweise über den Bereich von Dehnungsfugen in großen Fertigungshallen, kann die vorliegende Erfindung nutzbringend eingesetzt werden.

Ein wichtiger Vorteil der Erfindung ist außerdem, dass sie auch für Anwendungen geeignet ist, bei denen die zu überwachenden Fahrzeuge sich auf einer Kurvenbahn bewegen.

Mit dem vorliegenden Verfahren und der hier beschriebenen Vorrichtung wird ein neues optisches Positionierungssystem bereitgestellt, welches mit einfachen Mitteln eine deutliche Steigerung der Messgenauigkeit bei sehr dynamischen Bewegungen ermöglicht.

## Patentansprüche

1. Verfahren zum Bestimmen der Position eines Fahrzeugs, welches entlang einer Bahn (12) bewegt wird,
wobei entlang der Bahn (12) Marker (20), insbesondere Codeträger oder Barcodes, angeordnet sind,
wobei die Marker (20) mit einer an dem Fahrzeug (10) angeordneten Digitalkamera (30) erfasst werden, und
wobei mittels Bildverarbeitung aus einer Lage mindestens eines Markerbilds im Erfassungsbereich (32) der Digitalkamera (30) eine Relativposition des Fahrzeugs (10) bezüglich des jeweiligen Markers (21, 22, 23) oder der jeweiligen Marker bestimmt wird,
**dadurch gekennzeichnet,**
**dass** auf Grundlage von Messdaten eines mit dem Fahrzeug (10) gekoppelten Beschleunigungssensors (66) eine von dem Fahrzeug (10) bis zu einem Abfragezeitpunkt (t) zurückgelegte Wegstrecke (s) bestimmt wird,
**dass** eine aktuelle Position des Fahrzeugs (10) unter Berücksichtigung eines zurückliegenden Positionsdatums und der auf Grundlage der Messdaten des Beschleunigungssensors bestimmten Wegstrecke berechnet wird,
**dass** die aktuelle Position des Fahrzeugs (10) ausgegeben wird und
**dass** der Beschleunigungssensor (66) geeicht wird durch Vergleich des letzten Positionsdatums mit der Position, welche sich aus dem vorletzten Positionsdatum und der zwischen den Aufnahmezeitpunkten des vorletzten und des letzten Positionsdatums zurückgelegten und auf Grundlage der Messdaten des Beschleunigungssensors (66) bestimmten Wegstrecke ergibt.

2. Verfahren nach Anspruch 1,
**dadurch gekennzeichnet,**
**dass** aus der Relativposition bezüglich eines bestimmten Markers (21, 22, 23) und einer bekannten Absolutposition dieses Markers (21, 22, 23) eine Absolutposition des Fahrzeugs (10) bestimmt wird.

3. Verfahren nach Anspruch 1 oder 2,
**dadurch gekennzeichnet,**
**dass** die von dem Fahrzeug (10) in einem Zeitraum von einem zurückliegenden Positionsdatum bis zu einem Abfragezeitpunkt zurückgelegte Wegstrecke durch Integration der von dem Beschleunigungssensor (66) in diesem Zeitraum aufgenommenen Messdaten unter Berücksichtigung der Geschwindigkeit des Fahrzeugs (10) zu Beginn des Zeitraums bestimmt wird.

4. Verfahren nach einem der Ansprüche 1 bis 3,
**dadurch gekennzeichnet,**
**dass** die aktuelle Position des Fahrzeugs (10) als Summe des letzten Positionsdatums und der seither zurückgelegten und auf Grundlage von Messdaten des Beschleunigungssensors (66) bestimmten Wegstrecke bestimmt wird.

5. Verfahren nach einem der Ansprüche 1 bis 4,
**dadurch gekennzeichnet,**
**dass** der Beschleunigungssensor (66) im laufenden Betrieb kontinuierlich nachgeeicht wird.

6. Verfahren nach einem der Ansprüche 1 bis 5,
**dadurch gekennzeichnet,**
**dass** ein Fehlersignal ausgegeben wird, wenn die Beschleunigung des Fahrzeugs (10) über einen festgelegten Zeitraum innerhalb oder außerhalb eines ebenfalls festgelegten Werteintervalls liegt.

7. Verfahren nach einem der Ansprüche 1 bis 6,
**dadurch gekennzeichnet,**
**dass** Beschleunigungen des Fahrzeugs (10) quer zu seiner Hauptbewegungsrichtung gemessen und mitprotokolliert werden.

8. Verfahren nach Anspruch 7,
**dadurch gekennzeichnet,**
**dass** ein Fehlersignal ausgegeben wird, wenn ein Integral der Beträge der Beschleunigungen des Fahrzeugs (10) quer zu seiner Hauptbewegungsrichtung einen festgelegten Grenzwert überschreitet.

9. Verfahren nach einem der Ansprüche 1 bis 8,
**dadurch gekennzeichnet,**
**dass** aus Messdaten des Beschleunigungssensors (66) und auf Grundlage einer für einen zurückliegenden Zeitpunkt vorliegenden Geschwindigkeitsinformation sowohl eine in x-Richtung als auch eine in y-Richtung zurückgelegte Wegstrecke bestimmt wird.

10. Vorrichtung zum Bestimmen der Position eines Fahrzeugs, welches entlang einer Bahn (12) beweglich ist, insbesondere zur Durchführung des Verfahrens nach einem der Ansprüche 1 bis 9,
mit einer an dem Fahrzeug (10) anzuordnende Digitalkamera (30) zum Erfassen von entlang der Bahn (12) angeordneten Markem (20), insbesondere Codeträgem oder Barcodes,
**gekennzeichnet durch**
einen mit dem Fahrzeug (10) zu koppelnden Beschleunigungssensor (66) zumindest zum Messen der Beschleunigung des Fahrzeugs (10) in einer Hauptbewegungsrichtung des Fahrzeugs (10),
eine Recheneinrichtung (40), welche eingerichtet ist
zum Bestimmen einer Relativposition des Fahrzeugs (10) bezüglich eines Markers (21, 22, 23) mittels Bildverarbeitung aus einer Lage des Bilds des jeweiligen Markers (21, 22, 23) in einem Erfassungsbereich (32) der Digitalkamera (30), zum Bestimmen einer von dem Fahrzeug (10) bis zu einem Abfragezeitpunkt zurückgelegten Wegstrecke auf Grundlage von Messdaten des Beschleunigungssensors (66) und einer für einen zurückliegenden Zeitpunkt bekannten Geschwindigkeit des Fahrzeugs (10),
zum Berechnen einer aktuellen Position des Fahrzeugs (10) unter Berücksichtigung eines zurückliegenden Positionsdatums und der auf Grundlage von Messdaten des Beschleunigungssensors bestimmten Wegstrecke und zum Eichen des Beschleunigungssensors (66) **durch** Vergleich des letzten Positionsdatums mit der Position, welche sich aus dem vorletzten Positionsdatum und der zwischen den Aufnahmezeitpunkten des vorletzten und des letzten Positionsdatums zurückgelegten und auf Grundlage der Messdaten des Beschleunigungssensors (66) bestimmten Wegstrecke ergibt.

11. Vorrichtung nach Anspruch 10,
**dadurch gekennzeichnet,**
**dass** der Beschleunigungssensor (66) ein zweiachsiger Beschleunigungssensor ist und zum Messen einer Beschleunigung des Fahrzeugs (10) in einer x- und in einer y-Richtung ausgelegt ist.

12. Vorrichtung nach einem der Ansprüche 10 oder 11,
**dadurch gekennzeichnet,**
**dass** die Recheneinrichtung (40) ein Mikrocontroller oder ein programmierbarer Logikbaustein ist.

13. Vorrichtung nach einem der Ansprüche 11 oder 12,
**dadurch gekennzeichnet,**
**dass** der zweiachsige Beschleunigungssensor (66) so an dem Fahrzeug (10) positioniert ist, dass die erste Messachse in Richtung einer Hauptbewegungsrichtung des Fahrzeugs (10) und die zweite Messachse in einer Richtung quer zur Hauptbewegungsrichtung des Fahrzeugs (10) ausgerichtet ist.

14. Computerprogramm mit Programmcodemitteln, um die Rechen- und Auswerteschritte eines Verfahrens nach einem der Ansprüche 1 bis 9 durchzuführen, wenn das Computerprogramm auf einem mit der Digitalkamera (30) wirkungsmäßig verbundenen Computer, insbesondere der Recheneinrichtung (40) gemäß Anspruch 10, ausgeführt wird.

15. Computerprogrammprodukt mit Programmcodemitteln, die auf einem Computer-lesbaren Datenträger gespeichert sind, um die Rechen- und Auswerteschritte eines Verfahrens nach einem der Ansprüche 1 bis 9 durchzuführen, wenn das Computerprogramm auf einem mit der Digitalkamera (30) wirkungsmäßig verbundenen Computer, insbesondere der Recheneinrichtung (40) gemäß Anspruch 10, ausgeführt wird.

## Claims

1. Method for determining the position of a vehicle which is moved along a lane (12), wherein markers (20), in particular code carriers or barcodes, are arranged along the lane (12),
wherein the markers (20) are detected with a digital camera (30) arranged on the vehicle (10), and
wherein by means of image processing a relative position of the vehicle (10) with respect to the respective marker (21, 22, 23) or the respective markers is determined from a position of at least one marker image in the detection range (32) of the digital camera (30),
**characterised in that**
based on measurement data of an acceleration sensor (66) coupled with the vehicle (10) a distance (s) covered by the vehicle (10) up to a polling time (t) is determined,
a current position of the vehicle (10) is calculated in consideration of a past position datum and the distance determined based on the measurement data of the acceleration sensor,
the current position of the vehicle (10) is output, and
the acceleration sensor (66) is calibrated by comparing the last position datum with the position resulting from the last-but-one position datum and the distance covered between the recording points in time of the last-but-one and the last position datum and determined based on the measurement data of the acceleration sensor (66).

2. Method according to claim 1,
**characterised in that**
an absolute position of the vehicle (10) is determined from the relative position with respect to a certain marker (21, 22, 23) and a known absolute position of this marker (21, 22, 23).

3. Method according to claim 1 or 2,
**characterised in that**
the distance covered by the vehicle (10) in a time period from a past position datum until a polling time is determined by integrating the measurement data recorded by the acceleration sensor (66) in this time period in consideration of the speed of the vehicle (10) at the start of the time period.

4. Method according to one of claims 1 to 3,
**characterised in that**
the current position of the vehicle (10) is determined as a sum of the last position datum and the distance covered since then and determined based on measurement data of the acceleration sensor (66).

5. Method according to one of claims 1 to 4,
**characterised in that**
the acceleration sensor (66) is constantly re-calibrated during current operation.

6. Method according to one of claims 1 to 5,
**characterised in that**
an error signal is output if the acceleration of the vehicle (10) over a fixed time period lies within or outside of a likewise fixed value interval.

7. Method according to one of claims 1 to 6,
**characterised in that**
accelerations of the vehicle (10) are measured transversely to its main movement direction and recorded.

8. Method according to claim 7,
**characterised in that**
an error signal is output if an integral of the amounts of the accelerations of the vehicle (10) transversely to its main movement direction exceeds a fixed threshold value.

9. Method according to one of claims 1 to 8,
**characterised in that**
from measurement data of the acceleration sensor (66) and based on speed information existing for a past point in time, a distance in both an x direction and also in a y direction is determined.

10. Device for determining the position of a vehicle which can be moved along a lane (12), in particular to carry out the method according to one of claims 1 to 9,
with a digital camera (30) to be arranged on the vehicle (10) to detect markers (20), in particular code carriers or barcodes, arranged along the lane (12),
**characterised by**
an acceleration sensor (66) to be coupled with the vehicle (10) at least to measure the acceleration of the vehicle (10) in a main movement direction of the vehicle (10),
a computing means (40) which is adapted
to determine a relative position of the vehicle (10) with reference to a marker (21, 22, 23) by means of image processing from a position of the image of the respective marker (21, 22, 23) in a detection range (32) of the digital camera (30),
to determine a distance covered by the vehicle (10) until a polling time based on measurement data of the acceleration sensor (66) and a speed of the vehicle (10) known for a past point in time,
to calculate a current position of the vehicle (10) in consideration of a past position datum and the distance determined based on measurement data of the acceleration sensor and to calibrate the acceleration sensor (66) by comparing the last position datum with the position resulting from the last-but-one position datum and the distance covered between the recording points in time of the last-but-one and
the last position datum and determined based on the measurement data of the acceleration sensor (66).

11. Device according to claim 10,
**characterised in that**
the acceleration sensor (66) is a two-axis acceleration sensor and is designed to measure an acceleration of the vehicle (10) in an x and in a y direction.

12. Device according to one of claims 10 or 11,
**characterised in that**
the computing means (40) is a microcontroller or a programmable logic component.

13. Device according to one of claims 11 or 12,
**characterised in that**
the two-axis acceleration sensor (66) is positioned on the vehicle (10) so that the first measurement axis is orientated in the direction of a main movement direction of the vehicle (10) and the second measurement axis is orientated in a direction transverse to the main movement direction of the vehicle (10).

14. Computer program with program code means to carry out the computing and evaluation steps of a method according to one of claims 1 to 9 if the computer program is run on a computer, in particular the computing means (40) according to claim 10, effectively connected to the digital camera (30).

15. Computer program product with program code means which are stored on a computer-readable data carrier in order to carry out the computing and evaluation steps of a method according to one of claims 1 to 9 if the computer program is run on a computer, in particular the computing means (40) according to claim 10, effectively connected to the digital camera (30).

## Revendications

1. Procédé de détermination de la position d'un véhicule, qui est déplacé le long d'une voie (12),
selon lequel des marqueurs (20), en particulier des supports de code ou des codes à barres, sont disposés le long de la voie (12),
selon lequel les marqueurs (20) sont détectés avec une caméra numérique (30) placée sur le véhicule (10), et
selon lequel une position relative du véhicule (10) par rapport à chaque marqueur (21, 22, 23) ou par rapport à chacun des marqueurs est déterminée au moyen d'un traitement d'image à partir d'un emplacement d'au moins une image de marqueur dans la zone de détection (32) de la caméra numérique (30),
**caractérisé:**
**en ce qu'**une distance parcourue (s) par le véhicule (10) jusqu'à un point temporel d'interrogation (t) est déterminée sur la base de données de mesure d'un capteur d'accélération (66) couplé au véhicule (10),
**en ce qu'**une position actuelle du véhicule (10) est calculée en tenant compte d'une donnée de position précédente et de la distance déterminée sur la base des données de mesure du capteur d'accélération,
**en ce que** la position actuelle du véhicule (10) est délivrée, et
**en ce que** le capteur d'accélération (66) est étalonné par une comparaison de la dernière donnée de position avec la position qui résulte de l'avant-dernière donnée de position et de la distance parcourue entre les points temporels d'interrogation des avant-dernière et dernière données de position et déterminée sur la base des données de mesure du capteur d'accélération (66).

2. Procédé selon la revendication 1,
**caractérisé:**
**en ce qu'**une position absolue du véhicule (10) est déterminée à partir de la position relative concernant un marqueur déterminé (21, 22, 23) et d'une position absolue connue de ce marqueur (21, 22, 23).

3. Procédé selon la revendication 1 ou 2,
**caractérisé:**
**en ce que** la distance parcourue par le véhicule (10) dans une période de temps comprise entre une donnée de position précédente et un point temporel d'interrogation est déterminée au moyen d'une intégration des données de mesures reçues du capteur d'accélération (66) dans cette période de temps en prenant en considération la vitesse du véhicule (10) au début de la période de temps.

4. Procédé selon une des revendications 1 à 3,
**caractérisé:**
**en ce que** la position actuelle du véhicule (10) est déterminée comme étant la somme de la dernière donnée de position et de la distance parcourue depuis ce moment-là et déterminée sur la base de données de mesure du capteur d'accélération (66).

5. Procédé selon une des revendications 1 à 4,
**caractérisé:**
**en ce que** le capteur d'accélération (66) est ré-étalonné de manière continue en cours de fonctionnement.

6. Procédé selon une des revendications 1 à 5,
**caractérisé:**
**en ce qu'**un signal d'erreur est émis si l'accélération du véhicule (10) se situe pendant une période de temps prédéterminée à l'intérieur ou à l'extérieur d'une plage de valeurs également prédéterminée.

7. Procédé selon une des revendications 1 à 6,
**caractérisé:**
**en ce que** des accélérations du véhicule (10) sont mesurées transversalement à la direction de déplacement principale de celui-ci et répertoriées.

8. Procédé selon la revendication 7,
**caractérisé:**
**en ce qu'**un signal d'erreur est émis si une intégrale des valeurs des accélérations du véhicule (10) transversalement à la direction de déplacement principale de celui-ci excède une valeur de seuil prédéterminée.

9. Procédé selon une des revendications 1 à 8,
**caractérisé:**
**en ce qu'**une distance parcourue aussi bien dans la direction x qu'également dans la direction y est déterminée à partir de données de mesure du capteur d'accélération (66) et sur la base d'une information de vitesse présente pour un point temporel précédent.

10. Dispositif de détermination de la position d'un véhicule qui est mobile le long d'une voie (12), en particulier par la mise en oeuvre du procédé selon une des revendications 1 à 9,
avec une caméra numérique (30) placée sur le véhicule (10) pour la détection de marqueurs (20) disposés le long de la voie (12), en particulier des supports de code ou des codes à barres,
**caractérisé par**:
un capteur d'accélération (66) couplé au véhicule (10) au moins pour la mesure de l'accélération du véhicule (10) dans une direction de déplacement principale du véhicule (10),
un dispositif de calcul (40), qui est organisé:
pour la détermination d'une position relative du véhicule (10) par rapport à un marqueur (21, 22, 23) au moyen d'un traitement d'image à partir d'un emplacement de l'image de chaque marqueur (21, 22, 23) dans une zone de détection (32) de la caméra numérique (30),
pour la détermination d'une distance parcourue par le véhicule (10) jusqu'à un point temporel d'interrogation sur la base des données de mesure du capteur d'accélération (66) et d'une vitesse du véhicule (10) connue pour un point temporel précédent,
pour le calcul d'une position actuelle du véhicule (10) en prenant en considération une donnée de position précédente et de la distance déterminée sur la base des données de mesure du capteur d'accélération, et pour l'étalonnage du capteur d'accélération (66) par une comparaison de la dernière donnée de position avec la position qui résulte de l'avant-dernière donnée de position et de la distance parcourue entre les point temporels d'interrogation des avant-dernière et dernière données de position et déterminée sur la base des données de mesure du capteur d'accélération (66).

11. Dispositif selon la revendication 10,
**caractérisé:**
**en ce que** le capteur d'accélération (66) est un capteur d'accélération à deux axes et est organisé pour la mesure d'une accélération du véhicule (10) dans une direction x et dans une direction y.

12. Dispositif selon une des revendications 10 ou 11,
**caractérisé:**
**en ce que** le dispositif de calcul (40) est un microcontrôleur ou un module logique programmable.

13. Dispositif selon une des revendications 11 ou 12,
**caractérisé:**
**en ce que** le capteur d'accélération (66) à deux axes est placé sur le véhicule (10) d'une manière telle que le premier axe de mesure est orienté dans la direction d'une direction de déplacement principale du véhicule (10) et le deuxième axe de mesure est orienté dans une direction transversale à la direction de déplacement principale du véhicule (10).

14. Programme d'ordinateur avec des moyens de codes de programme, pour mettre en oeuvre les étapes de calcul et d'exploitation d'un procédé selon une des revendications 1 à 9, lorsque le programme d'ordinateur est mis en oeuvre sur un ordinateur connecté fonctionnellement à la caméra numérique (30), en particulier au dispositif de calcul (40) conforme à la revendication 10.

15. Produit programme d'ordinateur avec des moyens de codes de programme qui sont mémorisés sur un support de données lisible par un ordinateur, pour mettre en oeuvre les étapes de calcul et d'exploitation d'un procédé selon une des revendications 1 à 9, lorsque le programme d'ordinateur est mis en oeuvre sur un ordinateur connecté fonctionnellement à la caméra numérique (30), en particulier au dispositif de calcul (40) conforme à la revendication 10.
